# EUROPÄISCHE PATENTANMELDUNG

(11) **EP 0 864 467 A2**
(43) Veröffentlichungstag der Anmeldung: **16.09.1998**
(21) Anmeldenummer: 97122893.7
(22) Anmeldetag: 24.12.1997
(51) Int. Cl.: B60R 19/34

(54) **Aufpralldämpfer**

(30) Priorität: 06.03.1997 DE 19709171
(71) Anmelder: YMOS AKTIENGESELLSCHAFT Industrieprodukte, 63179 Obertshausen (DE)
(72) Erfinder: Krumpe, Klaus, 64846 Grob-Zimmern (DE); Rutsaert, Thibaud, 63857 Waldaschaff (DE); Heim, Gunther, 63110 Rodgau (DE)
(74) Vertreter: Podszus, Burghart, Dipl.-Phys., Dipl.-Wirtsch.-Ing.

(57) **Zusammenfassung**

Die Erfindung betrifft einen Aufpralldämpfer (1;1') zur Energieaufnahme bei einem möglichen Front-, Heck- oder Seitenaufprall eines Kraftfahrzeuges auf ein Hindernis.

Um zu erreichen, daß der Aufpralldämpfer (1,1') einfach und kostengünsig herstellbar ist, und bei einem Aufprall auf ein Hindernis ein kontrollierbares Verformungsverhalten aufweist, schlägt die Erfindung vor, daß der Aufpralldämpfer (1;1') mindestens eine Dämpfereinheit (3,3') mit wabenförmiger Struktur umfaßt, die aus einem Hohlprofil mit fünf sich auf zwei Ebenen (12,13) quer zur Längsachse (6) des Aufpralldämpfers (1;1') verteilenden und miteinander verbundenen Hohlkammern (7-11) besteht. Von diesen Hohlkammern (7-11) sind vier zylinderförmig ausgebildet, wobei zwei der zylinderförmigen Hohlkammern über eine U-förmige Verbindungswand (11') so miteinander verbunden sind, daß sich eine etwa trapezförmige Randkontur ergibt.

## Beschreibung

Die Erfindung betrifft einen Aufpralldämpfer zur Energieaufnahme bei einem möglichen Front-, Heck- oder Seitenaufprall eines Kraftfahrzeuges auf ein Hindernis.

Zum Schutz der Insassen eines Fahrzeuges bei einem Front- oder Heckaufprall ist es bekannt, zwischen den jeweiligen Fahrzeuglängsträgern und den stoßstangenseitigen Querträgern Aufpralldämpfer (Crashboxen) anzuordnen, die die durch den Aufprall freiwerdende Energie durch Verformung aufnehmen.

Die Aufpralldämpfer können dabei beispielsweise als Faltrohre ausgebildet sein, bei denen die überschüssige Energie im wesentlichen durch einen Faltvorgang des sich in Längsrichtung (Hauptwirkrichtung der Kraft) erstreckenden Rohres absorbiert wird. Nachteilig ist bei der Verwendung derartiger Faltrohre, daß sie mit einem relativ hohen Fertigungsaufwand verbunden sind.

Bekannt geworden sind ferner Aufpralldämpfer, die eine gleichmäßige wabenförmige Struktur aufweisen. Nachteilig ist bei diesen bekannten Aufpralldämpfern vor allem, daß ein gezieltes Verformungsverhalten nur schwer zu erreichen ist. Außerdem rufen schon geringfügige Veränderungen des Krafteintrittwinkels erhebliche Verluste bei der Wirksamkeit des Systems hervor, wobei ein kontrolliertes Faltverhalten nicht mehr erreicht werden kann. Schließlich ist der Anteil der Energieabsorption, der auf die quer zur Crashrichtung liegenden Verbindungsstege zurückgeht, sehr gering.

Der Erfindung liegt die Aufgabe zugrunde, einen Aufpralldämpfer der eingangs erwähnten Art anzugeben, der einfach und billig herstellbar ist, und der bei einem Aufprall auf ein Hindernis ein kontrollierbares Verformungsverhalten aufweist.

Diese Aufgabe wird erfindungsgemäß durch die Merkmale des kennzeichnenden Teils des Anspruchs 1 gelöst. Weitere, besonders vorteilhafte Ausgestaltungen der Erfindung offenbaren die Unteransprüche.

Die Erfindung beruht im wesentlichen auf dem Gedanken, daß der Aufpralldämpfer mindestens eine Dämpfereinheit mit wabenförmiger Struktur umfaßt, die aus einem Hohlprofil mit fünf sich auf zwei Ebenen quer zur Längsachse des Aufpralldämpfers verteilenden und miteinander verbundenen Hohlkammern besteht. Von diesen Hohlkammern sind vier zylinderförmig ausgebildet, wobei zwei der zylinderförmigen Hohlkammern über eine U-förmige Verbindungswand so miteinander verbunden sind, daß sich eine trapezförmige Randkontur ergibt.

Überraschenderweise hat sich gezeigt, daß der erfindungsgemäße Aufpralldämpfer durch die U-förmige Verbindungswand ein wesentlich besseres, insbesondere homogeneres Faltverhalten gegenüber einem vergleichbaren Aufpralldämpfer mit fünf gleichartigen zylinderförmigen Hohlkammern aufweist.

Außerdem ist der bei einem Crash zur Verfügung stehende maximale Deformationsweg des erfindungsgemäßen Aufpralldämpfers größer als bei einem Aufpralldämpfer mit fünf gleichen zylinderförmigen Hohlkammern.

Schließlich kann bei der Fertigung erfindungsgemäßer Aufpralldämpfer gegenüber bekannten Aufpralldämpfern erheblich Material eingespart und die Profilwerkzeuge einfacher ausgeführt werden.

Die Wandstärke wie auch die Durchmesser der Kammern werden bei unterschiedlichen Fahrzeugtypen an die jeweiligen Energieabsorptionsanforderungen angepaßt. Über diese Parameter ist ein gezieltes Verformungsverhalten und die gewünschte Höhe an Energieabsorption einstellbar.

Bei einer weiteren Ausführungsform der Erfindung setzt sich der Aufpralldämpfer aus mindestens zwei quer zur Längsachse angeordneten und miteinander verbundenen Dämpfereinheiten zusammem, wobei der zwischen den Schmalseiten der beiden Dämpfereinheiten entstehende Freiraum ebenfalls durch ein U-förmiges, eine weitere Hohlkammer bildendes Verbindungsteil überbrückt ist.

Als Material für die Hohlprofile haben sich besonders Aluminium- und/oder Magnesiumlegierungen als geeignet erwiesen. Denn die entsprechenden Hohlprofile weisen ein geringes Gewicht auf, sind einfach herstellbar und besitzen eine ausreichende Festigkeit. Im Rahmen der Herstellung der Aufpralldämpfer als Strangpreßprofil ist außerdem auf einfache Weise eine Integration der Einrichtungen zur Anbindung des Aufpralldämpfers an die benachbarten Träger (wie Flansche, Steckverbindungen etc.) möglich.

Weitere Einzelheiten und Vorteile der Erfindung ergeben sich aus den folgenden anhand von Figuren erläuterten Ausführungsbeispielen. Es zeigen:
- Fig.1: die perspektivische Ansicht eines erfindungsgemäßen Aufpralldämpfers mit einer Dämpfereinheit;
- Fig.2: ein das Verformungsverhalten des in Fig.1 dargestellten Aufpralldämpfers wiedergebendes Diagramm;
- Fig.3: die Anordnung zweier Aufpralldämpfer gemäß Fig.1 an dem Querträger eines Kraftfahrzeuges;
- Fig.4: ein weiteres Ausführungsbeispiel einer Anordnung mit zwei Aufpralldämpfern und
- Fig.5 und 6: die Seitenansichten von jeweils aus zwei Dämpfereinheiten bestehenden Aufpralldämpfern.

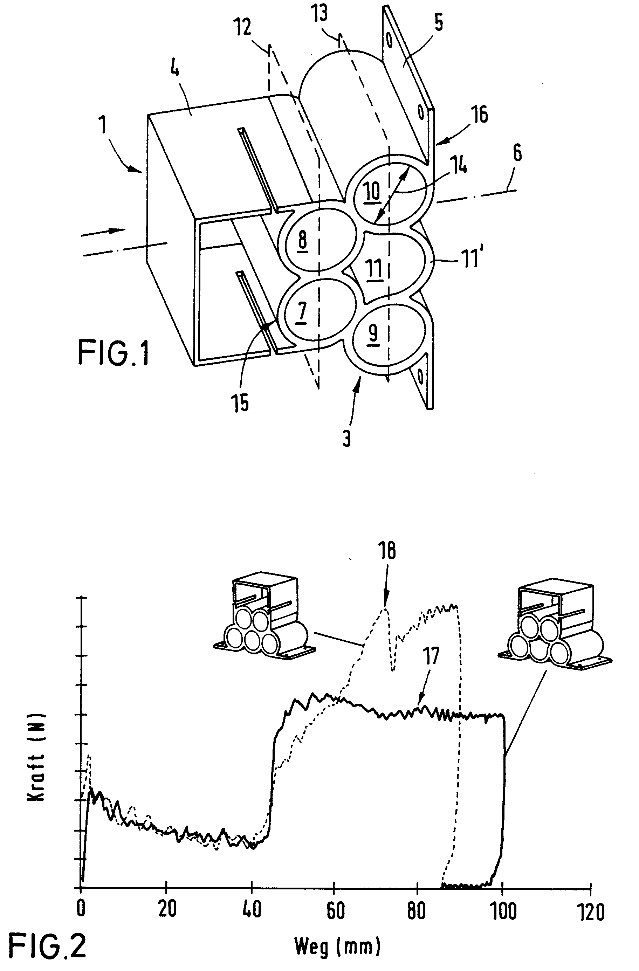

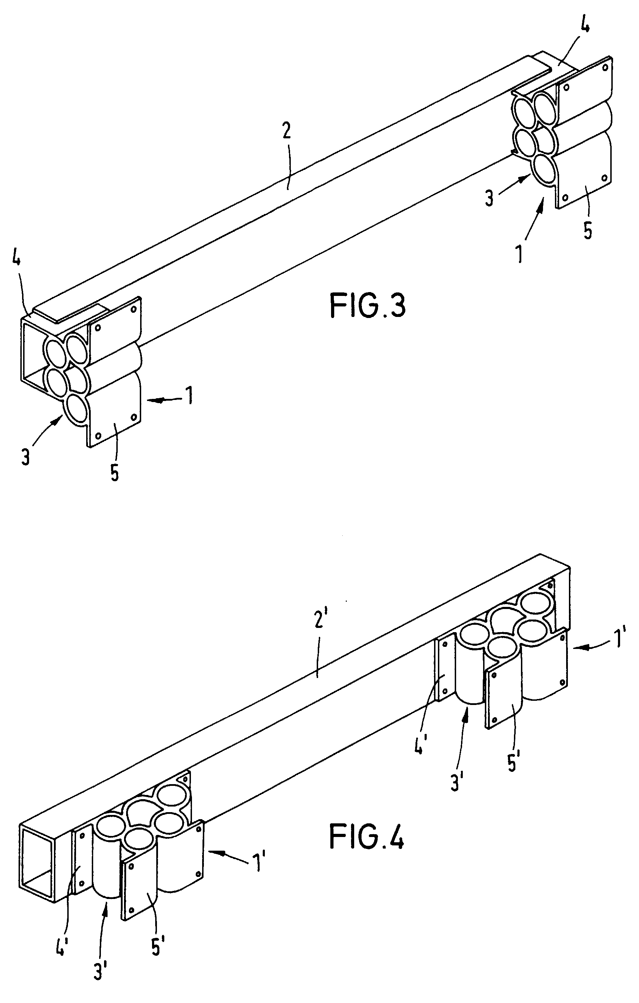

In Fig.1 ist mit 1 ein erfindungsgemäßer Aufpralldämpfer eines Kraftfahrzeuges bezeichnet, der beispielsweise zur Energieaufnahme bei einem Frontaufprall zwischen dem jeweiligen stoßstangenseitigen Querträger 2 (Fig. 3) eines Kraftfahrzeuges und einem mit der Fahrgastzelle verbundenen Längsträger verbindbar ist. Der Aufpralldämpfer 1 besteht im wesentlichen aus einer eine wäbenförmige Struktur aufweisenden Dämpfereinheit 3, einer Steckhülse 4 zur Verbindung des Aufpralldämpfers 1 an dem entsprechenden Querträger 2 des Fahrzeuges und einem Befestigungsflansch 5 zur Verbindung des Aufpralldämpfers mit dem Längsträger des entsprechenden Kraftfahrzeuges.

Bei der Dämpfereinheit 3 handelt es sich um ein Strangpreß-Hohlprofil aus einer Aluminium- oder Magnesiumlegierung, dessen Profil sich quer zur Längsachse 6 des Aufpralldämpfers 1 erstreckt. Das Hohlprofil 3 besteht im wesentlichen aus fünf sich quer zur Längsachse 6 des Aufpralldämpfers erstreckenden und miteinander verbundenen Hohlkammern 7-11. Dabei sind zwei zylinderförmig ausgebildete Kohlkammern 7, 8 des Hohlprofiles 3 in einer zur Längsachse 6 senkrechten ersten Ebene 12 angeordnet und direkt miteinander verbunden.

In einer zur Längsachse 6 senkrechten zweiten Ebene 13 sind zwei weitere zylinderförmig ausgebildete Hohlkammern 9, 10 des Hohlprofiles 3 angeordnet und über eine U-förmige, die fünfte Hohlkammer 11 umschließende Verbindungswand 11' miteinander verbunden, derart, daß der Querschnitt des Hohlprofiles 3 eine etwa trapezförmige Randkontur aufweist. Die zylinderförmigen Hohlkammern 7, 8 und 9, 10 besitzen bei dem dargestellten Ausführungsbeispiel alle die gleichen Innendurchmesser 14.

An der schmalen Seite 15 des Hohlprofiles 3 ist die Steckhülse 4 und an der breiten Seite 16 der Befestigungsflansch 5 angeordnet. Die Steckhülse 4 und der Befestigungsflansch 5 sind Teil des Strangpreßprofiles und brauchen daher nicht separat an der Dämpfereinheit 3 befestigt zu werden.

Fig.2 zeigt das Verformungsverhalten des vorstehend beschriebenen an einem Querträger 2 befestigten Aufpralldämpfer 1 im Vergleich zu einem entsprechenden Aufpralldämpfer mit fünf gleichen zylinderförmigen Hohlkammern. Dabei gibt die mit 17 bezeichnete Kurve den Kraft-Weg-Verlauf des erfindungsgemäßen Aufpralldämpfers wieder, wobei die Kraft entlang der Längsachse 6 des Aufpralldämpfers 1 wirkt. Zum Vergleich wurde auch die entsprechende mit 18 bezeichnete Kurve für einen Aufpralldämpfer mit fünf gleichen zylinderförmigen Hohlkammern dargestellt.

Den Kurven 17 und 18 ist deutlich zu entnehmen, daß bis zu einem Deformationsweg von etwa 45 mm beide Aufpralldämpfer einen weitgehend identischen Kraftverlauf aufweisen, der auf die Verformung des Querträgers 2 zurückzuführen ist. Bei einem weiteren Kraftanstieg weist dann der Aufprallträger mit fünf identischen zylinderförmigen Kammern einen ungleichmäßig ansteigenden Kraftverlauf (vgl. Kurve 18) auf. Demgegenüber weist der erfindungsgemäße Aufpralldämpfer 1 einen Kraftverlauf auf, der zunächst aus einem sprungartigen Anstieg und einem sich daran anschließenden nahezu konstanten Kraftverlauf (Kraftniveau) besteht (vgl. Kurve 17).

Zur Auslegung des Aufpralldämpfers 1 hinsichtlich der Höhe des Kraftniveaus, können außer der Wahl des Materials auch die Wandstärke der Kammerwände und die Außendurchmesser der zylinderförmigen Hohlkammern entsprechend verändert werden.

Die Erfindung ist selbstverständlich nicht auf die vorstehend beschriebenen Ausführungsbeispiele beschränkt. So kann beispielsweise durch Einsatz von energieabsorbierenden Schäumen in den Hohlkammern ein entsprechend progressives Deformationsverhalten des jeweiligen Aufpralldämpfers erhalten werden.

Ferner kann die Befestigung des Aufpralldämpfers an dem Querträger über Befestigungsflansche erfolgen. Ein entsprechendes Ausführungsbeispiel zeigt Fig.4. Dabei sind die Flansche mit 4' und 5' bezeichnet. Aus Gründen einer gegenüber Fig.3 veränderten Krafteinleitung (bzw. aus Gründen einer geänderten Einbausituation heraus) ist der mit 1' bezeichnete Aufpralldämpfer über seine breite Seite mit dem Querträger 2' verbunden. Die Dämpfereinheit 3' ist bei diesem Ausführungsbeispiel gegenüber der Dämpfereinheit 3 (Fig.1) um 90° gedreht angeordnet.

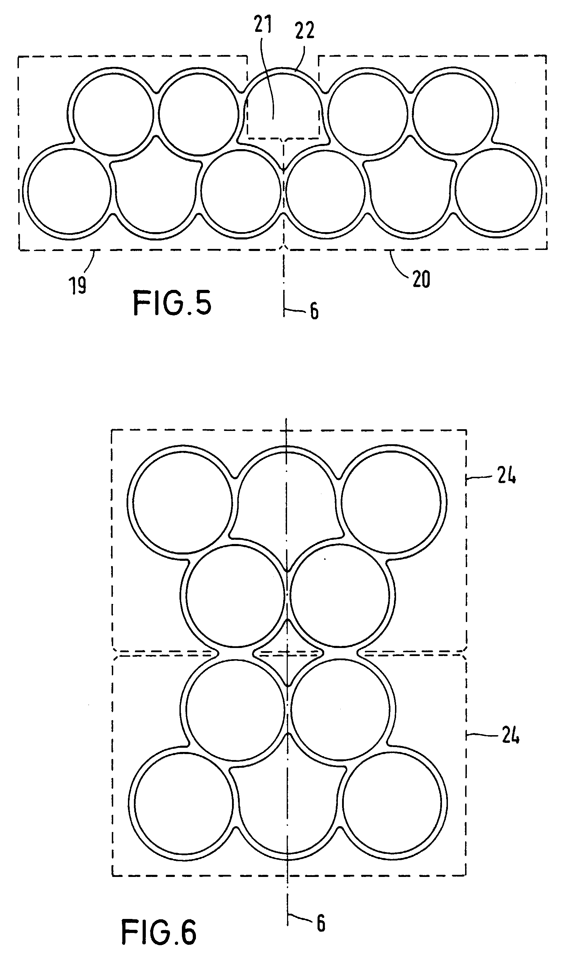

Außerdem kann der Aufpralldämpfer sich auch aus zwei oder mehreren quer zur Längsachse angeordneten und miteinander verbundenen Dämpfereinheiten zusammensetzen, wobei der zwischen den Schmalseiten der beiden Dämpfereinheiten entstehende Freiraum ebenfalls durch eine U-förmige, eine weitere Hohlkammer umschließende Verbindungswand überbrückt ist. Ein entsprechendes Ausführungsbeispiel ist in der Fig.5 wiedergegeben. Dabei sind mit 19 und 20 die beiden miteinander verbundenen Dämpfereinheiten bezeichnet, deren Freiraum 21 durch die mit 22 bezeichnete Verbindungswand überbrückt ist.

Der Aufpralldämpfer kann sich auch aus zwei oder mehreren in Richtung der Längsachse (Stoßrichtung) angeordneten und miteinander verbundenen Dämpfereinheiten zusammensetzen. Ein derartiges Ausführungsbeispiel zeigt Fig.6. Dabei sind mit 23 und 24 die beiden miteinander verbundenen Dämpfereinheiten bezeichnet, die bei diesem Ausführungsbeispiel mit ihren Schmalseiten miteinander verbunden sind.

Schließlich kann der erfindungsgemäße Aufpralldämpfer auch aus einer Kombination einer oder mehrerer Dämpfereinheiten, wie sie in Fig.1 dargestellt ist, und einer herkömmlichen Dämpfereinheit, z.B. aus mehreren miteinander verbundenen Hohlkammern, bestehen.

Es versteht sich von selbst, daß die Hohlkammern der Dämpfereinheiten nicht zwingend alle die gleiche Wandstärke und/oder einen gleichen Innendurchmesser aufweisen müssen. Vielmehr hängt die Wahl der Abmessungen der einzelnen Kohlkammern u.a. von der geforderten Energieabsorption und den jeweiligen geometrischen Gegebenheiten ab.

Im übrigen ist der Einsatz der Aufpralldämpfer nicht nur auf den Front- oder Heckbereich eines Fahrzeuges beschränkt. Durch eine entsprechende Verbindung mit einem starren Teil des Fahrzeuges kann der erfindungsgemäße Aufpralldämpfer auch als Motorraum- oder Tür-Aufpralldämpfer zum Einsatz kommen.

### Bezugsieichenliste

- 1,1': Aufpralldämpfer
- 2,2': Querträger
- 3,3': Dämpfereinheit, Hohlprofil
- 4,4': Flansch, Steckhülse
- 5,5': Befestigungsflansch
- 6: Längsachse
- 7,8: zylinderförmige Hohlkammern
- 9,10: zylinderförmige Hohlkammern
- 11: Hohlkammer
- 11': U-förmige Verbindungswand
- 12: erste Ebene
- 13: zweite Ebene
- 14: Innendurchmesser
- 15: schmale Seite (Dämpfungseinheit)
- 16: breite Seite (Dämpfungseinheit)
- 17, 18: Kurven
- 19,20: Dämpfereinheiten
- 21: Freiraum
- 22: U-förmige Verbindungswand
- 23,24: Dämpfereinheiten

## Patentansprüche

1. Aufpralldämpfer zur Energieaufnahme bei einem möglichen Front-, Seiten- oder Heckaufprall eines Kraftfahrzeuges auf ein Hindernis, wobei
a) der Aufpralldämpfer (1;1') mindestens eine Dämpfereinheit (3;3';19,20,23,24) mit wabenförmiger Struktur umfaßt, die aus einem Hohlprofil mit fünf sich quer zur Längsachse (6) des Aufpralldämpfers (1;1') erstreckenden und miteinander verbundenen Hohlkammern (7-11) besteht,
b) zwei zylinderförmig ausgebildete Hohlkammern (7,8) des Hohlprofiles (3;3') in einer zur Längsachse (6) senkrechten ersten Ebene (12) angeordnet und direkt miteinander verbunden sind und
c) zwei weitere zylinderförmig ausgebildete Hohlkammern (9,10) des Hohlprofiles (3;3') in einer zur Längsachse (6) senkrechten zweiten Ebene (13) angeordnet und über eine U-förmige, die fünfte Hohlkammer (11) bildende Verbindungswand (11') miteinander verbunden sind, derart, daß der Querschnitt des Hohlprofiles (3;3') eine etwa trapezförmige Randkontur aufweist.

2. Aufpralldämpfer nach Anspruch 1, **dadurch gekennzeichnet**, daß der Aufpralldämpfer (1;1') auf seiner Vorder- und Rückseite integrierte Befestigungsflansche besitzt.

3. Aufpralldämpfer nach Anspruch 1 oder 2, **dadurch gekennzeichnet**, daß der Aufpralldämpfer (1;1') zur Energieaufnahme bei einem möglichen Front- und/oder Heckaufprall zwischen dem jeweiligen stoßstangenseitigen Querträger (2;2') und dem jeweiligen mit der Fahrgastzelle des entsprechenden Fahrzeuges verbundenen Längsträger befestigt ist.

4. Aufpralldämpfer nach Anspruch 3, **dadurch gekennzeichnet**, daß der Aufpralldämpfer (1) an seiner dem Querträger (2) zugewandten Seite eine Steckhülse (4) aufweist, mit der er in eine entsprechende Ausnehmung des Querträgers (2) des jeweiligen Kraftfahrzeuges steckbar ist.

5. Aufpralldämpfer nach Anspruch 1 oder 2, **dadurch gekennzeichnet**, daß der Aufpralldämpfer (1;1') zwischen einem starren Teil des Fahrzeuges und dem Fahrzeugmotor oder innerhalb des Türbereiches angeordnet ist.

6. Aufpralldämpfer nach einem der Ansprüche 1 bis 5, **dadurch gekennzeichnet**, daß mindestens ein Teil der Hohlkammern (7-11) des Aufpralldämpfers (1;1') mit einem energieaufnehmenden Schaum ausgefüllt ist.

7. Aufpralldämpfer nach einem der Ansprüche 1 bis 6, **dadurch gekennzeichnet**, daß der Aufpralldämpfer (1;1') sich aus mindestens zwei quer zur Längsachse (6) angeordneten und miteinander verbundenen erfindungsgemäßen Dämpfereinheiten (19,20) zusammensetzt, wobei der zwischen den Schmalseiten der beiden Dämpfereinheiten entstehende Freiraum (21) ebenfalls durch eine U-förmige, eine weitere Kohlkammer bildende Verbindungswand (22) überbrückt ist.

8. Aufpralldämpfer nach einem der Ansprüche 1 bis 6, **dadurch gekennzeichnet**, daß der Aufpralldämpfer (1;1') sich aus mindestens zwei in Richtung der zur Längsachse (6) angeordneten und miteinander verbundenen erfindungsgemäßen Dämpfereinheiten (23,24) zusammensetzt.

9. Aufpralldämpfer nach Anspruch 1 oder 2, **dadurch gekennzeichnet**, daß es sich bei dem Hohlprofil um ein quergepreßtes Strangpreßprofil handelt.

10. Aufpralldämpfer nach einem der Ansprüche 1 bis 9, **dadurch gekennzeichnet**, daß das Strangpreßprofil aus einer Aluminium- oder Magnesiumlegierung besteht.
